# FASCICULE DE BREVET EUROPEEN

(11) **EP 0 739 070 B1**
(45) Date de publication et mention de la délivrance du brevet: **07.07.1999**
(21) Numéro de dépôt: 96390002.2
(22) Date de dépôt: 12.04.1996
(51) Int. Cl.: H02G 3/18, F21V 23/00

(54) **Dispositif de connexion électrique pour le raccordement d'un appareil électrique au réseau**
Elektrische Verbindungsvorrichtung für die Kupplung eines Elektrogerätes am Netz
Electrical connecting device for the connection of an electrical apparatus to the network

(30) Priorité: 18.04.1995 FR 9504702
(43) Date de publication de la demande: 23.10.1996
(73) Titulaire: MOULAGES PLASTIQUES DU MIDI Société Anonyme, F-31600 Muret (FR)
(72) Inventeur: Dauphin, Claude, 37150 Dierre (FR); Albignac, Michel, 31600 Seysses (FR)
(74) Mandataire: Cabinet BARRE LAFORGUE & associés

(56) Documents cités:
- WO-A-90/05393
- DE-A- 3 415 734
- FR-A- 2 132 273
- FR-A- 2 349 982
- GB-A- 2 241 389
- GB-A- 2 257 845
- US-A- 4 967 041

## Description

L'invention concerne un dispositif de connexion électrique pour le raccordement au réseau d'un appareil électrique tel que par exemple un luminaire, notamment fluorescent, une enseigne lumineuse, un radiateur, des meubles de cuisine ou de salles de bain.

A l'heure actuelle, le raccordement au réseau d'un appareil électrique du type précité impose d'ouvrir ce dernier en vue d'effectuer les câblages électriques. De cette nécessité découle, d'une part, un temps de branchement relativement important ayant des répercussions non négligeables sur les coûts d'installation et, d'autre part, l'obligation de posséder l'outillage adéquat.

La présente invention vise à pallier cet inconvénient et a pour objectif essentiel de fournir un dispositif de connexion permettant de raccorder électriquement des appareils électriques, sans outillage et sans nécessiter d'ouvrir ces derniers.

Un autre objectif de l'invention est de fournir un dispositif de connexion ne gênant pas la manutention et le transport des appareils électriques, avant installation.

Un autre objectif de l'invention est de fournir un dispositif de connexion permettant de faire du "repiquage" sur un appareil électrique en vue de l'alimentation d'un autre appareil électrique, sans nécessiter d'outillage et sans nécessiter d'ouvrir ces derniers.

A cet effet, l'invention vise un dispositif de connexion électrique pour le raccordement d'un appareil électrique au réseau, comprenant :
- un boîtier de connexion destiné à être encastré dans une découpe appropriée ménagée dans une paroi accessible de l'extérieur de l'appareil électrique, comportant :
   . une face, dite supérieure, ouverte,
   . des parois latérales longitudinales et transversales s'étendant à partir de la face supérieure, une des parois transversales comportant au moins une lumière pour le passage du câblage interne de l'appareil électrique, et les parois longitudinales étant dotées d'un rebord longitudinal supérieur apte à venir au contact de la sous-face de la paroi accessible dudit appareil électrique, et présentant en saillie des organes d'encliquetage agencés pour venir se loger dans des orifices conjugués ménagés dans ladite paroi de part et d'autre de la découpe,
   . une paroi, dite inférieure, présentant à partir de la paroi transversale dotée d'au moins une lumière, au moins une portion de surface inclinée longitudinalement par rapport à la face supérieure, adaptée pour former avec ladite paroi transversale et les parois longitudinales un logement pour un bloc de jonction pour le raccordement des câblages interne et d'alimentation, dans lequel ledit bloc de jonction repose sur une face inclinée,
   . un système de pinces disposé dans ledit boîtier de façon à assurer le maintien du câblage d'alimentation,
- un couvercle de forme conjuguée du boîtier de connexion, adapté pour coiffer ledit boîtier, comportant au moins une lumière ménagée vers l'extrémité dudit couvercle agencée pour se trouver à l'opposé de la paroi transversale de ce boîtier dotée d'au moins une lumière, de façon à permettre le passage du câblage d'alimentation,
- des moyens d'encliquetage du couvercle sur le boîtier de connexion.

Un tel dispositif de connexion est donc conçu pour être monté par encliquetage sur une des parois accessibles de l'extérieur de l'appareil électrique, sur la chaîne d'assemblage de cet appareil, de par l'intérieur de ce dernier. De plus, il permet de réaliser également le câblage interne des appareils électriques sur la chaîne d'assemblage desdits appareils, de par l'intérieur de ces derniers, en faisant passer le câblage interne au travers des lumières ménagées dans une des parois transversales du boîtier.

Lors de l'installation des appareils électriques, la seule opération à effectuer consiste à connecter sur le bloc de jonction disposé dans le boîtier les câbles d'alimentation du réseau. Or, de par la structure de ce boîtier comportant notamment une paroi inférieure inclinée sur au moins une portion de sa longueur, cette opération s'avère très aisée car le (ou les) câble(s) peuvent être présenté(s) directement en regard du bloc de jonction reposant sur cette paroi inférieure et n'ont à subir aucune torsion en vue de leur connexion. De plus, moyennant l'utilisation d'un bloc de jonction à connexion automatique, du type à guillotine, cette opération ne nécessite aucun outillage.

La fermeture de ce dispositif de connexion nécessite, quant à elle, simplement de présenter le couvercle au-dessus du boîtier et d'assurer la coopération de ces éléments par encliquetage, cette opération ne nécessitant également pas d'outillage. Il est à noter, de plus, que lors de cette fermeture, le (ou les) câble(s) n'ayant subi aucune torsion ne gêne(nt) en rien la mise en place du couvercle et s'étende(nt) naturellement au travers de chaque lumière ménagée dans ce dernier.

En outre, ces câbles sont parfaitement maintenus grâce à la présence du système de pinces disposé dans le boîtier.

Ce dispositif de connexion est donc intégré dans l'appareil électrique, sur la chaîne d'assemblage de ce dernier, sans perturber les paramètres de fabrication, et est ensuite directement accessible pour l'installateur évitant donc à celui-ci d'avoir à démonter l'appareil en vue du raccordement de ce dernier au réseau. Par conséquent, il présente des avantages tant lors de la fabrication que lors de l'installation de l'appareil électrique.

Selon un mode de réalisation préférentiel, la paroi transversale dotée d'au moins une lumière est inclinée de façon à s'étendre orthogonalement par rapport à la portion de surface inclinée de la paroi inférieure.

Grâce à cette inclinaison, le bloc de jonction repose donc par sa face inférieure sur la face inclinée de la paroi inférieure du boîtier, et vient de plus en appui, par sa face frontale arrière, contre la paroi transversale dudit boîtier.

Selon une autre caractéristique de l'invention, le couvercle est relié au boîtier par une lanière souple, et comporte une face supérieure dotée en saillie d'un pion d'encliquetage apte à venir se loger dans un orifice ménagé dans la paroi accessible de l'appareil électrique, dans une position où ledit couvercle est rabattu sur ladite paroi et dégage la face supérieure dudit boîtier.

Cette disposition permet de réaliser un dispositif de connexion d'un seul tenant dont le couvercle se trouve plaqué sur la paroi de l'appareil électrique avant l'installation de ce dernier, ne gênant en rien le transport et la manutention dudit appareil.

Selon une autre caractéristique de l'invention, les organes d'encliquetage du boîtier sur la paroi accessible de l'appareil électrique comprennent des crochets d'encliquetage dotés d'une extrémité de crochetage orientée en direction de la paroi transversale dotée d'au moins une lumière, et un talon d'encliquetage disposé au droit du bord supérieur de la paroi transversale opposée, agencé pour coiffer une portion du bord correspondant de la découpe ménagée dans ladite paroi.

Cette structure des organes d'encliquetage formant un système d'accrochage du type à baïonnette associé à un talon d'encliquetage interdisant tout mouvement longitudinal du boîtier après sa mise en place, garantit contre tout risque de chute de ce boîtier lors du branchement de l'appareil électrique du fait que les crochets d'encliquetage sont orientés dans le sens de la poussée exercée sur ledit boîtier lors de la présentation et de la connexion du câblage.

En outre, en vue d'assurer un parfait maintien du bloc de jonction, le dispositif de connexion comprend avantageusement deux crochets en saillie par rapport aux faces internes des parois longitudinales dudit boîtier, aptes à s'effacer latéralement lors de l'introduction du bloc de jonction sous l'effet de l'élasticité desdites parois longitudinales, et à verrouiller ledit bloc de jonction une fois ce dernier mis en place.

Selon une autre caractéristique de l'invention, le couvercle présente des dimensions supérieures à celles du boîtier, les moyens d'encliquetage desdits couvercle et boîtier comportant :
- des ergots d'encliquetage disposés en partie supérieure des organes d'encliquetage du boîtier, ménagés de façon à se trouver au-dessus de la paroi de l'appareil électrique après mise en place dudit boîtier,
- des lumières ménagées latéralement dans le couvercle aptes à venir loger la partie supérieure des organes d'encliquetage et à coopérer avec les ergots d'encliquetage de ces derniers.

De plus, le couvercle présente avantageusement deux lumières de passage du câblage, disposées symétriquement de part et d'autre de l'axe de symétrie longitudinal dudit couvercle. La présence de ces deux lumières a pour avantage de permettre d'effectuer des "repiquages" en vue de l'alimentation d'un autre appareil électrique, et ce sans nécessiter d'outillage, ni d'ouvrir les appareils.

De plus, en vue d'assurer le maintien des deux câbles, le système de pinces est alors préférentiellement constitué d'une aile centrale présentant la forme d'un V dont le sommet est orienté en direction opposé du logement du bloc de jonction, et deux ailes latérales obliques accolées chacune à une des parois longitudinales du boîtier, lesdites ailes s'étendant orthogonalement par rapport à la portion de surface de la paroi inférieure parallèle à la face supérieure et délimitant deux espaces aptes à permettre chacun le maintien d'un câble.

De telles ailes ont pour fonction d'assurer un maintien des câbles au niveau de la gaine extérieure assurant la double isolation desdits câbles.

D'autres buts et avantages de l'invention ressortiront de la description détaillée qui suit en référence aux dessins annexés qui en représentent, à titre d'exemple non limitatif, un mode de réalisation préférentiel. Sur ces dessins qui font partie intégrante de la présente description :
- la figure 1 est une vue en perspective d'un dispositif de connexion conforme à l'invention monté en l'exemple sur une tôle de luminaire fluorescent, après branchement au réseau et avant fermeture du couvercle,
- la figure 2 est une vue de dessus de ce dispositif de connexion dans son état ouvert,
- la figure 3 en est une coupe longitudinale par un plan vertical A,
- la figure 4 est une coupe transversale de ce dispositif de connexion par un plan vertical B, sur laquelle le couvercle est représenté disposé au-dessus du boîtier,
- et la figure 5 est une coupe longitudinale partielle à échelle agrandie représentant un des organes d'encliquetage respectivement du boîtier sur la tôle supérieure du luminaire, et du couvercle sur le boîtier, dans la position fermée du dispositif de connexion.

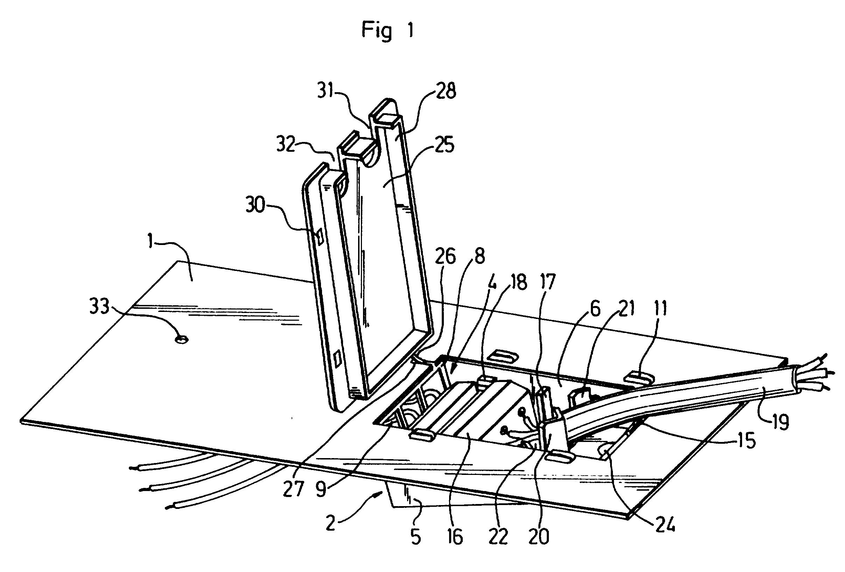

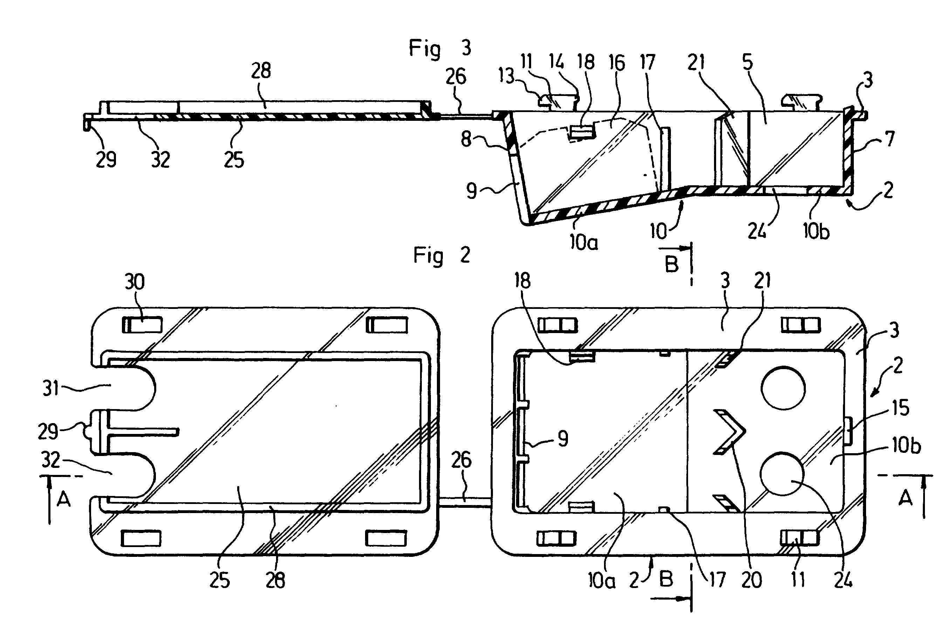

Le dispositif de connexion conforme à l'invention et tel que représenté aux figures 1 à 4 est destiné à être monté sur la tôle supérieure 1 d'un luminaire, sur la chaîne d'assemblage de ce luminaire, et à permettre le câblage interne dudit luminaire sur ladite chaîne d'assemblage, ce montage et ce câblage étant effectués de par l'intérieur des luminaires.

A cet effet, des découpes doivent être effectuées au préalable dans cette tôle supérieure 1, qui seront explicitées dans la description qui suit.

Le dispositif de connexion comprend, en premier lieu, un boîtier 2 présentant une forme générale parallélépipédique rectangle comportant une face supérieure ouverte bordée d'un rebord périphérique externe 3 agencé pour venir se plaquer sous la tôle 1. En vue de la mise en place, par l'intérieur du luminaire, de ce boîtier 2, une découpe 4 de dimensions rectangulaires similaires à celles de la face ouverte dudit boîtier est pratiquée dans la tôle 1.

Ce boîtier 2 comprend deux parois longitudinales 5, 6 et une paroi transversale 7 s'étendant orthogonalement par rapport à la face supérieure, et une paroi transversale 8 inclinée d'un angle de l'ordre de dix degrés par rapport à la verticale.

Cette paroi transversale inclinée 8 est, en outre, percée de lumières telles que 9, en l'exemple au nombre de trois, permettant le câblage interne du luminaire par l'intérieur de ce dernier.

Ce boîtier 2 comporte de plus une paroi inférieure 10 présentant longitudinalement, à partir de la paroi transversale inclinée 8, une portion de surface 10a inclinée par rapport à la face supérieure, équivalent sensiblement à la demi-longueur de cette paroi inférieure 10, et une portion de surface 10b parallèle à la face supérieure, équivalent à l'autre demi-longueur de ladite paroi inférieure.

La pente de la portion inclinée 10a de cette paroi inférieure 10 est sensiblement de l'ordre de dix degrés de façon que ladite portion inclinée s'étende orthogonalement par rapport à la paroi transversale inclinée 8.

Le boîtier 2 comporte, en outre, des moyens d'encliquetage comprenant, en premier lieu des organes d'encliquetage, tels que 11, agencés pour venir se loger dans des orifices rectangulaires, tels que 12, ménagés au préalable dans la tôle supérieure 1 de part et d'autre des côtés longitudinaux de la découpe principale 4.

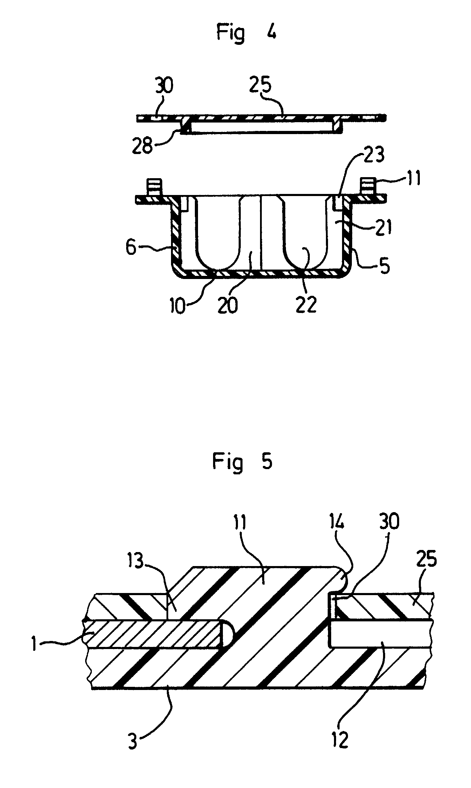

Ces organes d'encliquetage 11, en l'exemple au nombre de quatre, sont disposés en saillie par rapport aux bords longitudinaux du rebord périphérique externe 3. Tel que représenté à la figure 5, ils présentent au niveau de leur extrémité longitudinale orientée vers la paroi transversale inclinée 8, la forme d'un crochet 13 adapté pour venir coiffer le bord de la tôle supérieure 1 délimitant une des extrémités d'un des orifices 12.

Vers leur extrémité longitudinale opposée, ces organes d'encliquetage 11 comprennent, en outre, un ergot d'encliquetage 14 décalé verticalement vers le haut par rapport au crochet d'encliquetage 13 et destiné au verrouillage du couvercle tel que décrit ci-dessous.

Les moyens d'encliquetage comportent, de plus, un talon d'encliquetage 15 disposé au droit du bord supérieur de la paroi transversale 7, agencé pour coiffer une portion du bord correspondant de la découpe principale 4 et empêcher ainsi tout déplacement du boîtier 2 une fois celui-ci monté sur la tôle 1.

Le boîtier 2 intègre, par ailleurs, des organes de maintien d'un bloc de jonction 16, tel qu'une barrette automatique du type à guillotine, adaptés pour que ce dernier vienne reposer sur la portion de surface inclinée 10a de la paroi inférieure 10, et en appui contre la paroi transversale inclinée 8.

Ces moyens de maintien comprennent, en premier lieu, deux barrettes telles que 17, accolées chacune à la face interne des parois longitudinales 5, 6 et s'étendant depuis la paroi inférieure 10, orthogonalement par rapport à la face supérieure, lesdites barrettes étant situées à une distance de la paroi transversale inclinée 8 équivalant à l'encombrement longitudinal du bloc de jonction 16.

Ces moyens de maintien comprennent, en outre, deux crochets, tels que 18, en saillie par rapport aux faces internes des parois longitudinales 5, 6, aptes à s'effacer latéralement lors de l'introduction du bloc de jonction 16 sous l'effet de l'élasticité desdites parois longitudinales, et à venir verrouiller ledit bloc de jonction une fois ce dernier mis en place.

Le boîtier 2 comporte, par ailleurs, un système de pinces disposé de façon à assurer le maintien d'un ou de deux câble(s) d'alimentation 19, au niveau de la gaine extérieure assurant la double isolation du (ou des) dit(s) câble(s).

Ce système de pinces comprend, en premier lieu, une aile centrale 20 présentant la forme d'un V dont le sommet s'étend verticalement par rapport à la portion de surface 10b de la paroi inférieure 10, et est orienté en direction de la paroi transversale 7.

Ce système de pinces comprend, en outre, deux ailes obliques, telles que 21, orientées en direction de la paroi transversale inclinée 8, et accolées chacune à une paroi longitudinale 5, 6, chacune desdites ailes s'étendant orthogonalement par rapport à la portion de surface 10b de la paroi inférieure 10 et étant adaptée pour délimiter avec l'aile centrale 20 un espace tel que 22, apte à assurer le maintien d'un câble 19.

De plus, tel que représenté à la figure 4, les ailes centrale 20 et obliques 21 sont conformées de façon que le fond de chaque espace 22 qu'elles délimitent présente une section semi-circulaire conjuguée de la forme cylindrique des câbles 19.

Tel que représenté à la figure 4, chaque aile oblique 21 comporte, enfin, une échancrure 23 en partie haute, au niveau de sa jonction avec la paroi longitudinale 5, 6 correspondante, adaptée pour permettre de fermer le couvercle tel que décrit ci-après.

Le boîtier 2 comporte, en dernier lieu, deux orifices tels que 24 ménagés dans la paroi inférieure 10 symétriquement de part et d'autre de l'axe de symétrie longitudinal de cette dernière, et disposés entre le système de pinces 20, 21 et la paroi transversale 7. Ces deux orifices 24 ont pour but de permettre, dans des cas particuliers, d'effectuer le raccordement au réseau de par l'intérieur du luminaire en ouvrant celui-ci, c'est-à-dire en utilisant la technique de raccordement connue à l'heure actuelle.

Le dispositif de connexion comprend, en second lieu, un couvercle 25 de forme générale rectangulaire relié au rebord périphérique 3 du boîtier, au droit de la paroi transversale inclinée 8 de ce dernier, par une lanière souple 26 venant se loger, dans la position ouverte de ce couvercle 25 où ce dernier est rabattu sur la tôle 1, dans une fente 27 découpée dans ladite tôle dans le prolongement de la découpe principale 4.

Ce couvercle 25, de dimensions supérieures à celles de la face supérieure du boîtier 2, présente une jupe périphérique 28 de rigidification adaptée pour venir s'emboîter dans ledit boîtier, en se logeant notamment dans les échancrures 23 des ailes obliques 21.

Ce couvercle 25 comporte, en outre, en saillie par rapport à sa face supérieure, un pion d'encliquetage 29 apte à venir se loger dans un orifice 33 ménagé dans la tôle supérieure 1, dans une position ouverte où ledit couvercle est rabattu sur ladite tôle et dégage la face supérieure du boîtier 2.

Le couvercle 25 comporte, par ailleurs, quatre lumières latérales, telles que 30, disposées de façon à loger, chacune, la partie supérieure d'un organe d'encliquetage 11, dans la position fermée de ce couvercle, et à coopérer, tel que représenté à la figure 5, avec l'ergot d'encliquetage 14 de cet organe d'encliquetage 11 en vue d'assurer le maintien dans ladite position fermée dudit couvercle.

Ce couvercle 25 comporte, enfin, deux lumières 31, 32 de passage du câblage d'alimentation, disposées symétriquement de part et d'autre de l'axe de symétrie longitudinal dudit couvercle, au droit du bord d'extrémité transversal de ce dernier se trouvant au-dessus de la paroi transversale 7 du boîtier 2 dans la position fermée du dispositif de connexion.

Tel que représenté à la figure 1, une de ces lumières 31 est conçue pour permettre le passage du câble d'alimentation 19 du luminaire. L'autre lumière 32 permet, quant à elle, le passage d'un deuxième câble (non représenté) en vue d'effectuer un "repiquage" pour l'alimentation d'un autre luminaire.

Un tel dispositif de connexion permet de raccorder très aisément, et sans outillage, un luminaire au réseau, sans nécessiter d'ouvrir ce luminaire, en présentant le câble d'alimentation 19 directement en regard du bloc de jonction 16 dont la disposition évite d'avoir à faire subir des torsions à ce câble 19, puis après connexion, de refermer par une simple pression le couvercle 25 conçu pour permettre le passage dudit câble.

En outre, la conception des moyens d'encliquetage 11, 15 garantit, lors de ce branchement, contre tout risque de chute du boîtier 2 du fait que les crochets d'encliquetage 11 sont orientés dans le sens de la poussée exercée sur ledit boîtier.

## Revendications

1. Dispositif de connexion électrique pour le raccordement d'un appareil électrique au réseau, caractérisé en ce qu'il comprend en combinaison :
- un boîtier de connexion (2) destiné à être encastré dans une découpe (4) appropriée ménagée dans une paroi (1) accessible de l'extérieur de l'appareil électrique, comportant :
. une face, dite supérieure, ouverte,
. des parois latérales longitudinales (5, 6) et transversales (7, 8) s'étendant à partir de la face supérieure, une des parois transversales (8) comportant au moins une lumière (9) pour le passage du câblage interne de l'appareil électrique, et les parois longitudinales (5, 6) étant dotées d'un rebord longitudinal supérieur (3) apte à venir au contact de la sous-face de la paroi accessible (1) dudit appareil électrique, et présentant en saillie des organes d'encliquetage (11) agencés pour venir se loger dans des orifices (12) conjugués ménagés dans ladite paroi de part et d'autre de la découpe (4),
. une paroi (10), dite inférieure, présentant à partir de la paroi transversale (8) dotée d'au moins une lumière (9), au moins une portion de surface (10a) inclinée longitudinalement par rapport à la face supérieure, adaptée pour former avec ladite paroi transversale et les parois longitudinales (5, 6) un logement pour un bloc de jonction (16) pour le raccordement des câblages interne et d'alimentation (19), dans lequel ledit bloc de jonction repose sur une face inclinée.
. un système de pinces disposé dans ledit boîtier de façon à assurer le maintien du câblage d'alimentation (19),
- un couvercle (25) de forme conjuguée du boîtier de connexion (2), adapté pour coiffer ledit boîtier, comportant au moins une lumière (31, 32) ménagée vers l'extrémité dudit couvercle agencée pour se trouver à l'opposé de la paroi transversale (8) de ce boîtier (2) dotée d'au moins une lumière (9), de façon à permettre le passage du câblage d'alimentation (19),
- des moyens (14, 30) d'encliquetage du couvercle (25) sur le boîtier de connexion (2).

2. Dispositif de connexion selon la revendication 1, caractérisé en ce que la paroi inférieure (10) est inclinée par rapport à la face supérieure sensiblement sur sa demi-longueur, et est parallèle à ladite face supérieure sur son autre demi-longueur.

3. Dispositif de connexion selon l'une des revendications 1 ou 2, caractérisé en ce que la pente de la portion inclinée (10a) de la paroi inférieure (10) est de l'ordre de dix degrés.

4. Dispositif de connexion selon l'une des revendications 1 à 3, caractérisé en ce que la paroi transversale (8) dotée d'au moins une lumière (9) est inclinée de façon à s'étendre orthogonalement par rapport à la portion de surface inclinée (10a) de la paroi inférieure (10).

5. Dispositif de connexion selon l'une des revendications précédentes, caractérisé en ce que le couvercle (25) est relié au boîtier (2) par une lanière souple (26), et comporte une face supérieure dotée en saillie d'un pion d'encliquetage (29) apte à venir se loger dans un orifice (33) ménagé dans la paroi accessible (1) de l'appareil électrique, dans une position où ledit couvercle est rabattu sur ladite paroi et dégage la face supérieure dudit boîtier.

6. Dispositif de connexion selon l'une des revendications précédentes, caractérisé en ce que les organes d'encliquetage du boîtier (2) sur la paroi accessible (1) de l'appareil électrique comprennent des crochets d'encliquetage (11) dotés d'une extrémité de crochetage (13) orientée en direction de la paroi transversale (8) dotée d'au moins une lumière (9), et un talon d'encliquetage (15) disposé au droit du bord supérieur de la paroi transversale opposée (7) agencé pour coiffer une portion du bord correspondant de la découpe (4) ménagée dans ladite paroi.

7. Dispositif de connexion selon l'une des revendications précédentes, caractérisé en ce qu'il comprend des moyens de maintien du bloc de jonction (16) dans le boîtier (2) comportant deux crochets en saillie par rapport aux faces internes des parois longitudinales (5, 6) dudit boîtier, aptes à s'effacer latéralement lors de l'introduction du bloc de jonction (16) sous l'effet de l'élasticité desdites parois longitudinales, et à verrouiller ledit bloc de jonction une fois ce dernier mis en place.

8. Dispositif de connexion selon l'une des revendications précédentes, caractérisé en ce que le couvercle (25) comporte une jupe de rigidification périphérique (28) apte à venir s'emboîter dans le boîtier (2).

9. Dispositif de connexion selon l'une des revendications précédentes, caractérisé en ce que le couvercle (25) présente des dimensions supérieures à celles du boîtier (2), les moyens d'encliquetage desdits couvercle et boîtier comportant :
- des ergots d'encliquetage (14) disposés en partie supérieure des organes d'encliquetage (11) du boîtier (2), ménagés de façon à se trouver au-dessus de la paroi (1) après mise en place dudit boîtier,
- des lumières (30) ménagées latéralement dans le couvercle (25) aptes à venir loger la partie supérieure des organes d'encliquetage (11) et à coopérer avec les ergots d'encliquetage (14) de ces derniers.

10. Dispositif de connexion selon l'une des revendications précédentes, caractérisé en ce que le couvercle (25) présente deux lumières (31, 32) de passage du câblage (19), disposées symétriquement de part et d'autre de l'axe de symétrie longitudinal dudit couvercle.

11. Dispositif de connexion selon la revendication 10, caractérisé en ce que le système de pinces est constitué d'une aile centrale (20) présentant la forme d'un V dont le sommet est orienté en direction opposée du logement du bloc de jonction (16), et deux ailes latérales obliques (21) accolées chacune à une des parois longitudinales (5, 6) du boîtier (2), lesdites ailes s'étendant orthogonalement par rapport à la portion de surface (10b) de la paroi inférieure (10) parallèle à la face supérieure et délimitant deux espaces (22) aptes à permettre chacun le maintien d'un câble (19).

## Patentansprüche

1. Verbindungsgerät für den elektrischen Anschluß eines elektrischen Apparates am Versorgungsnetz, dadurch gekennzeichnet, dass es in Kombination die folgenden Merkmale aufweist:
- ein zum Einbauen in einem in einer von ausserhalb des elektrischen Apparates zugänglichen Wand (1) ausgesparten, geeigneten Ausschnitt (4) vorgesehenes Verbindungsgehäuse (2) mit
* einer offenen, sogenannten oberen Seite,
* seitlichen, longitudinalen (5, 6) und querliegenden Wände (7, 8), die von der oberen Seite ausgehen, wobei eine der querliegenden Wände (8) mindestens eine Öffnung (9) für die interne Verkabelung des elektrischen Apparates aufweist und die longitudinalen Wände (5, 6) mit einem longitudinalen, oberen Rand (3) ausgestattet sind, welcher angepasst um in Berührung mit der Unterfläche der zugänglichen Wand (1) des elektrischen Apparates zu treten ist, und vorspringende Einrastungselemente (11) aufweisen, die so angeordnet sind, dass sie sich in zugeordneten Schlitzen (12) einfügen, die in der Wand an beiden Seiten des Ausschnittes (4) ausgespart sind,
* einer sogenannten unteren Wand (10), die von der querliegenden, mit mindestens einer Öffnung (9) ausgestatteten Wand (8) ausgeht, wobei mindestens ein Teil (10a) der Wand longitudinal in Bezug auf die obere Seite geneigt und angepasst ist, um mit der querliegenden Wand und den longitudinalen Wänden (5, 6) ein Lager zur Aufnahme eines Verbindungsblocks (16) für den Anschluß der internen Verkabelung und der Versorgungsverkabelung (19) zu bilden, wobei der Verbindungsblock auf einer geneigten Fläche gelagert wird,
* einem in dem Gehäuse angeordnetes Klammersystem zur Sicherung der Haltung der Versorgungsverkabelung (19),
- eine Abdeckung (25) in einer mit dem Verbindungsgehäuse (2) zugeordneten Form, die zur Abdeckung des Gehäuses angepasst ist, wobei die Abdeckung mit mindestens einer Öffnung (31, 32) versehen ist, die so an dem Ende der Abdeckung angeordnet ist, dass sie sich gegenüber der mit mindestens einer Öffnung (9) ausgestatteten, querliegenden Wand (8) dieses Gehäuses (2) befindet, um die Durchführung der Versorgungsverkabelung (19) zu erlauben,
- Mittel (14, 30) zur Einrastung der Abdeckung (25) auf dem Verbindungsgehäuse (2).

2. Verbindungsgerät gemäss Anspruch 1, dadurch gekennzeichnet, dass die untere Wand (10) in Bezug auf die obere Seite etwa bei seiner Halblänge geneigt ist und mit der anderen Halblänge parallel zur oberen Seite verläuft.

3. Verbindungsgerät gemäss einem der Ansprüche 1 oder 2, dadurch gekennzeichnet, dass die Neigung des geneigten Abschnitts (10a) der unteren Wand (10) einen Winkel in der Grössenordnung von zehn Grad einschliesst.

4. Verbindungsgerät gemäss einem der Ansprüche 1 bis 3, dadurch gekennzeichnet, dass die mit mindestens einer Öffnung (9) ausgestattete, querliegende Wand (8) so geneigt ist, dass sie sich orthogonal in Bezug auf den Abschnitt (10a) der geneigten Fläche der unteren Wand (10) erstreckt.

5. Verbindungsgerät gemäss einem der vorhergehenden Ansprüche, dadurch gekennzeichnet, dass die Abdeckung (25) mit dem Gehäuse (2) durch einen flexiblen Riemen (26) verbunden ist und eine obere Fläche aufweist, die mit einem vorspringenden Einrastungszapfen (29) versehen ist, der so angeordnet ist, dass er sich in einer in der zugängliche Wand (1) des elektrischen Apparates ausgesparteten Öffnung (33) einfügt, in einer Position in der die Abdeckung auf die Wand zurückgeklappt ist und die obere Seite des Gehäuses freigibt.

6. Verbindungsgerät gemäss einem der vorhergehenden Ansprüche, dadurch gekennzeichnet, dass die Einrastungselemente des Gehäuses (2) auf der zugänglichen Wand (1) des elektrischen Apparates Einrastungshaken (11) aufweisen, die mit einem in Richtung der querliegenden, mit mindestens einer Öffnung (9) ausgestatteten Wand (8) ausgerichteten Verhakingsende (13) versehen sind, sowie einen am oberen Rand der gegenüberliegenden, querliegenden Wand (7) liegenden Einrastungsfuss (15), wobei dieser Rand zur Bedeckung eines entsprechenden Randabschnitts des in der Wand ausgesparten Ausschnitts (4) angeordnet ist.

7. Verbindungsgerät gemäss einem der vorhergehenden Ansprüche, dadurch gekennzeichnet, dass es Mittel für die Haltung des Verbindungsblocks (16) in dem Gehäuse (2) aufweist, die zwei in Bezug auf die inneren Flächen der longitudinalen Wände (5, 6) des Gehäuses vorspringende Haken umfassen, die so angepasst sind, dass sie sich infolge der Einführung des Verbindungsblocks (16) aufgrund der Elastizität der longitudinalen Wände seitlich zurückgezogen werden und den Verbindungsblock verriegeln, sobald sich dieser an seinem Platz positioniert ist.

8. Verbindungsgerät gemäss einem der vorhergehenden Ansprüche, dadurch gekennzeichnet, dass die Abdeckung (25) eine zur Einpassung in das Gehäuse (2) angepasste, umschließende Versteifungsschürze (28) aufweist.

9. Verbindungsgerät gemäss einem der vorhergehenden Ansprüche, dadurch gekennzeichnet, dass die Abdeckung (25) grössere Dimensionen aufweist, als die des Gehäuses (2), wobei die Einrastungsmittel der Abdeckung und des Gehäuses
- am oberen Abschnitt der Einrastungselemente (11) des Gehäuses (2) angebrachte Einrastungsnasen (14), die so vorgesehen sind, dass sie sich nach der Plazierung des Gehäuses oberhalb der Wand (1) befinden,
- seitlich in der Abdeckung (25) ausgesparte Öffnungen (30), die so angepasst sind, dass sie den oberen Abschnitt der Einrastungselemente (11) aufnehmen und mit den Einrastungsnasen (14) zusammenwirken können, umfassen.

10. Verbindungsgerät gemäss einem der vorhergehenden Ansprüche, dadurch gekennzeichnet, dass die Abdeckung (25) zwei Öffnungen (31, 32) zur Durchführung der Verkabelung (19) aufweist, die symmetrisch an beiden Seiten der longitudinalen Symmetrieachse der Abdeckung angeordnet sind.

11. Verbindungsgerät gemäss dem Anspruch 10, dadurch gekennzeichnet, dass sich das Klemmsystem aus einem V-förmigen zentralen Steg (20), dessen Spitze in die des Verbindungsblocks (16) entgegengesetzten Richtung weist und aus zwei seitlichen, schrägen Stegen (21), die jede an eine der longitudinalen Wände (5, 6) des Gehäuses (2) angefügt sind, wobei sich die Stegen orthogonal in Bezug auf den Flächenabschnitt (10b) der unteren, zur oberen Seite parallelen Wand (10) erstrecken und zwei Räume (22) begrenzen, die jede zur Aufnahme eines Kabels (19) angepasst sind, zusammengesetzt ist.

## Claims

1. Electrical connection device for connecting an electrical appliance to the power supply, characterized in that it comprises in combination :
- a connection box (2) to be embedded in a suitable cutout (4) in a wall (1) of the electrical appliance, said wall being accessible from the outside of the electrical appliance, said box comprising :
* a so-called top open face,
* longitudinal (5, 6) and transversal (7, 8) side walls depending from the top face, wherein one (8) of said transversal walls has at least one opening (9) for passing the internal wiring of the electrical appliance therethrough, and wherein the longitudinal walls (5, 6) are provided with an upper longitudinal rim (3) able to engage the underface of the accessible wall (1) of said electrical appliance and have protruding ratchet members (11) arranged to be received in conjugated openings (12) in said wall on both sides of said cutout (4),
* a so-called bottom wall (10) having at least one surface portion (10a) extending from the transversal wall (8) provided with at least one opening (9), wherein said surface portion (10a) is tilted longitudinally in relation to the top face and adapted to form with said transversal wall and the longitudinal walls (5, 6) a housing for a connection block (16) for connecting the internal wiring and the power cable (19), said connection block being supported on one tilted face,
* a grip assembly positioned in said box so as to hold the power cable (19),
- a lid (25) having a shape which is conjugated to that of the connection box (2), said lid being adapted to cover said box and comprising at least one opening (31, 32) towards said cover end which is arranged to be positioned opposite the transversal wall (8) provided with at least one opening (9) of said box (2), so as to allow the power cable (19) to pass therethrough,
- ratchet means (14, 30) for snap-holding the lid (25) on the connection box (2).

2. Connection device according to claim 1, characterized in that the bottom wall (10) is tilted in relation to the top face substantially along half the length thereof, and is parallel to said top face along the other half-length.

3. Connection device according one of claims 1 or 2, characterized in that the slope of the tilted portion (10a) of the bottom wall (10) is of about ten degrees.

4. Connection device according one of claims 1 to 3, characterized in that the transversal wall (8) provided with at least one opening (9) is tilted so as to extend orthogonally in relation to the tilted surface portion (10a) of the bottom wall (10).

5. Connection device according to one of the preceding claims, characterized in that the lid (25) is attached to the box (2) by means of a flexible strap (26) and comprises an upper face provided with a protruding ratchet stud (29) able to be received in an opening (33) in the accessible wall (1) of the electrical appliance, in a position where said cover is folded back on said wall and sets free the top face of said box.

6. Connection device according to one of the preceding claims, characterized in that the ratchet members of the box (2) on the accessible wall (1) of the electrical appliance comprise ratchet hooks (11) provided with a hooking end (13) directed towards the transversal wall (8) provided with at least one opening (9), and a ratchet heel (15) positioned at the upper edge of the opposed transversal wall (7), said upper edge being arranged so as to cover a portion of the corresponding edge of the cutout (4) in said wall.

7. Connection device according to one of the preceding claims, characterized in that it comprises means for holding the connection block (16) inside the box (2), said means comprising a pair of hooks protruding from the inner faces of the longitudinal walls (5, 6) of said box, said inner faces being able to be retracted laterally by virtue of the resiliency of the longitudinal walls as the connection block (16) is inserted, and lock the connection block once said block is in position.

8. Connection device according to one of the preceding claims, characterized in that the lid (25) comprises a peripheral stiffening skirt (28) able to be nested in the box (2).

9. Connection device according to one of the preceding claims, characterized in that the lid (25) has dimensions greater than the box (2), wherein the ratchet means of said lid and box comprise :
- ratchet lugs (14) positioned in the upper portion of the ratchet members (11) of the box (2), and arranged so as to extend above the wall (1) once said box is in position,
- openings (30) arranged laterally in the lid (25) and able to receive the upper portion of the ratchet members (11) and cooperate with the ratchet lugs (14) thereof.

10. Connection device according to one of the preceding claims, characterized in that the lid (25) has a pair of openings (31, 32) for passing the cable (19) therethrough, said openings being positioned symmetrically on both sides of the longitudinal axis of symmetry of said cover.

11. Connection device according to claim 10, characterized in that the grip assembly is comprised of a V-shaped central web (20) the apex of which is directed in a direction opposed to the housing of the connection block (16), and a pair of tilted lateral webs (21), wherein said lateral webs are each joined with one of the longitudinal walls (5, 6) of the box (2), extend orthogonally in relation to the surface portion (10b) of the bottom wall (10) which is parallel to the top face and define a pair of spaces (22), each able to hold one cable (19).
